# EUROPEAN PATENT SPECIFICATION

(11) **EP 3 591 148 B1**
(45) Date of publication and mention of the grant of the patent: **27.09.2023**
(21) Application number: 18760909.4
(22) Date of filing: 23.02.2018
(51) Int. Cl.: E05B 47/00, E05B 49/00, E05B 65/46, G07F 11/62, A47B 96/00, E05B 65/02, G07F 17/12, G07F 17/10

(54) **MODULAR STORAGE DEVICE**
MODULARE LAGERVORRICHTUNG
DISPOSITIF MODULAIRE DE STOCKAGE

(30) Priority: 01.03.2017 ES 201730211 U
(43) Date of publication of application: 08.01.2020
(73) Proprietor: Dreams and Dreams, S.L., 46680 Algemesi, Valencia (ES); Arcamax Custodian 2010, S.L., 46600 Alzira (ES)
(72) Inventor: TEBAR CRESPO, José Vicente, 46680 Algemesi, Valencia (ES); RAMON, Garcia Piquer, 46600 Alzira (ES)
(74) Representative: Sahuquillo Huerta, Jesús
(86) International application number: PCT/ES2018/070141
(87) International publication number: WO 2018/158480

(56) References cited:
- EP-A1- 2 026 296
- WO-A1-2013/169114
- KR-A- 20160 149 686
- KR-B1- 101 169 442
- US-A1- 2001 045 449
- US-A1- 2013 144 428
- US-A1- 2015 186 840
- US-A1- 2015 227 882
- US-A1- 2016 053 514

## Description

### Object of the invention

The invention, as expressed in the wording of this descriptive report, refers to a modular storage device, mainly for sale purposes, which presents characteristics which are an advantage due to its novelty, these will be described in detail below, which represent an alternative to the technical current state.

The object of the present invention falls on a device that allows the installment of storage, for sale, rent, exchange and analogues of products or goods. It allows you to design modular systems, simple to install and configure, even for temporary installations, with high flexibility.

### Technical field of the invention

The field of application of the present invention is framed within the sector of the industry which is dedicated to the manufacture of apparatuses and devices for distance selling of parcels or of vending, as well as lockers within shopping centers, gymnasiums, sport complexes, etc.

### Invention Background

As a reference to the state of the art, it should be noted that these are well-known distance selling systems that begin with the creation of a device that stores the packages until the arrival of the buyer. An example can be seen in document US2008128444. The device described in this document is reasonably practical, but it is complex to install, and it is not scalable. In other words, to increase or decrease its capacity, the entire structure and equipment must be changed.

Thus, the objective of the present invention is to develop another storage device, in this case a modular one, to be able to define and modify at any time the useful dimensions of the device.

The document US2013/144428A1 discloses a method of controlling delivery of an item to a storage unit comprising at least two receptacles and a first control unit, the method comprising: transmitting item identification information, wherein the item identification information includes a unique item identifier and a recipient identifier; requesting availability information for at least one of the at least two receptacles at the storage unit; receiving availability information for at least one of the at least two receptacles at the storage unit; allowing access to an available one of the at least two receptacles; and transmitting a message to the recipient indicating a deposit of the item in the receptacle.

### Description of the invention

The modular storage device according to the invention is defined by the appended claims.

Specifically, what the invention proposes is a device that gives us the possibility of buying, renting, exchanging, auctioning. As it is modular, it is versatile and can be installed stably or temporarily in any commercial premises, libraries, gymnasiums, cafeterias, institutes, bars and such. All of this for both indoor and outdoor premises.

The modular storage device is of the type that includes at least one space with at least one electronically locked opening (electronic lock or electromagnetic actuator): It includes at least one electronic device (mobile phone, tablet, or similar) with an input and output of data, a processor, an internal memory, a connection to a wireless network, connected to a modular structure which is composed of at least one space. Each electronic device is connected (wired or wirelessly) to all electronic locks.

Advantageously, the structure is constituted by a series of modules, connectable to each other. When the connection between each electronic device and the electronic locks is made by wiring, each module of the structure can have male or female connectors at a predefined distance between each wall contact and the adjacent module. In one wall there will be female connectors and in the opposite one there will be male connectors to compose the chain of connectors. In order for these connectors to be well aligned, the height and width (in case of vertical placement) of the modules will be a multiple of such distance. These connectors form a wiring network connected to the electronic locks.

In some specific variants, the spaces will have openings with electronic locks on opposite sides of the structure and an electronic device which is accessible from each side of the structure. In this way it will be possible to have access for loading and unloading purposes from opposite points.

For the control of the contents, a camera is placed inside each space, allowing the entire base or bottom of the space to be seen. Optically recognizable markings may be placed on this background.

In order to facilitate the temporary installation of the device, it is convenient for it to have a battery.

According to the invention, the electronic device is a mobile phone fixed in the interior of one of the spaces of the structure. It is also preferable that each of the spaces has its own mobile phone to control the electronic lock, simplifying each installation.

### Brief description of the drawings

To complement the description that is being made and to help obtain a better understanding of the characteristics of the invention, this descriptive report is accompanied, as an integral part of it, with a sheet of plans in which the following has been represented with illustrative and not limitative character:
The number 1 and unique figure shows a schematic view in perspective of an example of the device of the invention, object of the invention, appreciating the parts and elements that it includes and the configuration and disposition of the same ones.

### Preferred embodiment of the invention

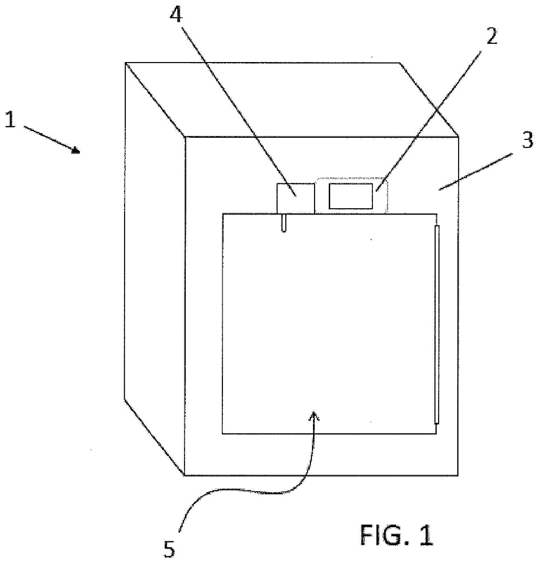

In view of the described figure 1, and according to the numbering adopted in it, it can be appreciated how the modular storage device (1) of the invention is configured from two elements, which can join and complement each other in very different and versatile ways. These elements can be installed anywhere, such as commercial premises, sports facilities, cafeterias, airports, bars and alike, acting as a mini store. For example, the device can be installed in commercial stands or promotional stands in shopping or sports centers, etc.

The storage device (1) is modular, in that it can be dimensioned during assembly by repeating one or both elements of the invention, resulting in devices of very different capacities, shapes, sizes and materials.

In particular, the elements that are part of the device are:
- An electronic device (2), with the capacity and functions of a mobile phone, tablet, or smartphone: input and output of data (it can be through a keyboard, touch screen or by wireless means of a device in the user's possession or not (his mobile, via NFC)), connection to a wireless network (mainly data) processor and internal memory. It must be able to communicate both with the other element of the device (via USB, Bluetooth, or other wired or wireless system) and with a private (intranet) or open data network (internet) by any conveniently secure method: SSL, private or public key encryption, etc.
- A closed structure (3), with an opening controlled by an electronic lock (4), and which will be where the product offered for sale is housed. The size, number of spaces (5) and the dimensions of the structure (3) will be variable as well as being able to be defined when the point of sale is created. Preferably, a basic structure (3) is defined, with the estimated dimensions for the type of product, which can be connected to each other several times to form the invention device (1).

The electronic locks (4) of the different structures must be able to communicate, by the method indicated above (USB, Bluetooth, or other wired or wireless system), with the electronic device (2), which will be the one that allows the opening of the same if the correct conditions are met.

If the communication of the electronic device (2) with the electronic locks (4) is by wiring, the structures (3) can have fixed points in itself (every "N" centimeters) a suitable male or female connector to connect with the adj acent structure (3) (aligning a male connector towards a female one or vice versa) and to connect its own network of electronic locks (4) to the electronic device (2) of control. To facilitate the use of the connectors, the structures (3) are made up of modules whose heights will be multiples of that distance.

Once installed in a point the way of using the modular storage device (1) is variable.

First of all, it can be a purchase made by a user, who uses his own mobile to access a server (for example, through an App). The server indicates a user number and/or password for the user to order the opening of the corresponding electronic lock (4). The command can be transmitted directly to the electronic device (2) manually, from the user's mobile phone or through the server.

Likewise, the purchase can be made in the electronic device (2) itself, which allows the user to take advantage of the data connection of the electronic device (2).

A second use is the rental of lockers in theme parks or similar, where the user is freed of their objects without having to have a key. If this service is also "sold" at central ticket offices, it would suffice with identifying your mobile phone at the ticket offices of each attraction. In this case, it would be possible to have two openings in each space, one to place your backpack before going on to attraction, and another to extract it after leaving the attraction without mixing up the flow of people arriving.

It would also be necessary to have an electronic device (2) on each side.

The device can also be used for the exchange of goods, e.g. for second-hand purchases over the internet. The seller can rent a space (5) in the structure (3) and depending on the size of the object being sold indicate the buyer the place and identifying number of such space (5). The buyer makes the payment by any means and collects the object at the device.

Inside the structure there is a camera available which allows to previously recognize what is inside the space (5) and know what is going to be bought. Thus, if it is a second-hand sale, it will be possible to observe if the content seems to correspond to what was agreed to be bought beforehand. It will also allow a system controller to remotely recognize which spaces (5) are empty and which are full at the end of the day or in order to fill the sales spaces. In this way, the need for other types of sensors that are less effective can be avoided. If marks are placed at the bottom of each space (5), an optical recognition system will decide in which spaces (5) these marks cannot be read and are therefore "occupied".

Optionally, the modular storage device (1) is autonomous. It has its own battery and therefore it does not require an external power supply. It is especially effective for temporary installations, such as promotional stands.

Figure 1 shows the preferred execution, where the electronic device (2) is a mobile phone, fixed in the interior in one of the spaces (5) of the structure (3). It is also preferred that each of the spaces (5) has its own mobile phone to control the electronic locking, simplifying each installation.

The camera which allows to observe the interior of the space (5) is the camera of the mobile phone, tablet or smartphone itself. To do this, an orientational mirror of the captured image is necessary, which will allow the camera to cover the entire area of interest.

## Claims

1. - A modular storage device (1) comprising:
a modular structure (3) comprising at least one space (5) arranged for storing contents with an opening controlled by an electronic lock (4), in which each of the spaces (5) has its own electronic device (2) connected to all electronic locks (4); the electronic device (2) further comprising a data input and output, a processor, an internal memory, and a connection to a wireless network,
wherein the electronic device (2) is a mobile phone, tablet, or smartphone,
**characterized in that** the mobile phone, tablet, or smartphone is fixed by the interior in one of the spaces (5) of the modular structure (3); and **in that** the mobile phone, tablet or smartphone comprises a camera arranged to observe the interior of the space (5) that includes an orientational mirror of the captured image which will allow the camera to cover an entire area of interest.

2. - The modular storage device (1) according to claim 1, whose connection between each electronic device (2) and the electronic locks (4) is produced by wiring, each module having the structure of male or female connectors at a predefined distance on each wall, the modules being of multiple height and widths of that distance.

3. - The modular storage device (1) according to claim 1, whose spaces (5) have openings with electronic closing on opposite sides of the structure (3) and an electronic device (2) accessible from each side of the structure (3).

4. - The modular storage device (1) according to claims 1 and 3, whose space (5) includes optically recognizable marks on its bottom.

5. - The modular device (1) according to claim 1, comprising a battery.

## Patentansprüche

1. - Eine modulare Aufbewahrungsvorrichtung (1), umfassend:
eine modulare Struktur (3), die mindestens einen Raum (5) umfasst, der zur Aufbewahrung von Inhalten mit einer durch ein elektronisches Schloss (4) gesteuerten Öffnung angeordnet ist, wobei jeder der Räume (5) seine eigene elektronische Vorrichtung (2) hat, die mit allen elektronischen Schlössern (4) verbunden ist; wobei die elektronische Vorrichtung (2) ferner eine Dateneingabe und -ausgabe, einen Prozessor, einen internen Speicher und eine Verbindung zu einem drahtlosen Netzwerk umfasst,
wobei das elektronische Gerät (2) ein Mobiltelefon, ein Tablet oder ein Smartphone ist,
**dadurch gekennzeichnet, dass** das Mobiltelefon, das Tablet oder das Smartphone durch das Innere in einem der Räume (5) der modularen Struktur (3) befestigt ist; und dass das Mobiltelefon, das Tablet oder das Smartphone eine Kamera umfasst, die so angeordnet ist, dass sie das Innere des Raums (5) beobachtet, die einen Orientierungsspiegel des aufgenommenen Bildes umfasst, der es der Kamera ermöglicht, einen gesamten Bereich von Interesse abzudecken.

2. - Die modulare Aufbewahrungsvorrichtung (1) nach Anspruch 1, deren Verbindung zwischen jedem elektronischen Gerät (2) und den elektronischen Schlössern (4) durch Verdrahtung hergestellt wird, wobei jedes Modul die Struktur von männlichen oder weiblichen Anschlüssen in einem vordefinierten Abstand an jeder Wand aufweist, wobei die Module mehrere Höhen und Breiten dieses Abstands aufweisen.

3. - Die modulare Aufbewahrungsvorrichtung (1) nach Anspruch 1, deren Räume (5) auf gegenüberliegenden Seiten der Struktur (3) mit elektronisch verschließbaren Öffnungen und einer elektronischen Vorrichtung (2) versehen sind, die von jeder Seite der Struktur (3) zugänglich ist.

4. - Die modulare Aufbewahrungsvorrichtung (1) nach Anspruch 1 und 3, deren Raum (5) optisch erkennbare Markierungen auf seinem Boden aufweist.

5. - Die modulare Vorrichtung (1) nach Anspruch 1, die eine Batterie enthält.

## Revendications

1. - Un dispositif de stockage modulaire (1) comprenant :
une structure modulaire (3) comprenant au moins un espace (5) agencé pour stocker des contenus avec une ouverture contrôlée par une serrure électronique (4), dans laquelle chacun des espaces (5) a son propre dispositif électronique (2) connecté à toutes les serrures électroniques (4) ; le dispositif électronique (2) comprend en outre une entrée et une sortie de données, un processeur, une mémoire interne, et une connexion à un réseau sans fil,
dans lequel le dispositif électronique (2) est un téléphone mobile, une tablette ou un smartphone,
**caractérisé en ce que** le téléphone mobile, la tablette ou le smartphone est fixé par l'intérieur dans l'un des espaces (5) de la structure modulaire (3) ; et **en ce que** le téléphone mobile, la tablette ou le smartphone comprend une caméra agencée pour observer l'intérieur de l'espace (5) qui comprend un miroir d'orientation de l'image capturée qui permettra à la caméra de couvrir une zone d'intérêt entière.

2. - Le dispositif de stockage modulaire (1) selon la revendication 1, dont la connexion entre chaque dispositif électronique (2) et les serrures électroniques (4) est réalisée par câblage, chaque module ayant la structure de connecteurs mâles ou femelles à une distance prédéfinie sur chaque paroi, les modules étant de hauteurs et de largeurs multiples de cette distance.

3. - Le dispositif de stockage modulaire (1) selon la revendication 1, dont les espaces (5) présentent des ouvertures à fermeture électronique sur les côtés opposés de la structure (3) et un dispositif électronique (2) accessible de chaque côté de la structure (3).

4. - Le dispositif de stockage modulaire (1) selon les revendications 1 et 3, dont l'espace (5) comporte des marques optiquement reconnaissables sur son fond.

5. - Le dispositif modulaire (1) selon la revendication 1, comprenant une batterie.
